(19) Europäisches Patentamt
European Patent Office
Office européen des brevets

(11) Numéro de publication: **0 070 220**
**B1**

(12) # FASCICULE DE BREVET EUROPEEN

(45) Date de publication du fascicule du brevet: **12.03.86**

(51) Int. Cl.⁴: **C 08 F 210/16**, C 08 F 4/68

(21) Numéro de dépôt: **82401210.8**

(22) Date de dépôt: **30.06.82**

(54) **Copolymères hétérogènes de l'éthylène pour la fabrication de films.**

(30) Priorité: **10.07.81 FR 8113598**

(43) Date de publication de la demande:
**19.01.83 Bulletin 83/3**

(45) Mention de la délivrance du brevet:
**12.03.86 Bulletin 86/11**

(84) Etats contractants désignés:
**AT BE CH DE FR GB IT LI LU NL SE**

(56) Documents cités:
**EP - A - 0 007 647**
**FR - A - 2 342 306**
**FR - A - 2 405 961**
**FR - A - 2 422 692**
**GB - A - 1 355 245**

**Le dossier contient des informations techniques présentées postérieurement au dépôt de la demande et ne figurant pas dans le présent fascicule.**

(73) Titulaire: **Société Chimique des Charbonnages S.A., Tour Aurore Place des Reflets, F-92080 Paris La Défense Cédex 5 (FR)**

(72) Inventeur: **Machon, Jean-Pierre, 83, rue Delisse-Engrand, F-62400 Béthune (FR)**
Inventeur: **Raviola, Florent, Lotissement du Bois des Montagnes Parcelle 22, Vaudricourt F-62131 Verquin (FR)**
Inventeur: **Hert, Marius, 21 Chaussée Brunehaut Estrée Cauchy, F-62690 Aubigny-en-Artois (FR)**

(74) Mandataire: **Dubost, Thierry, SOCIETE CHIMIQUE DES CHARBONNAGES Service Propriété Industrielle B.P. 57, F-62670 Mazingarbe (FR)**

EP 0 070 220 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte à des copolymères et terpolymères de l'éthylène capables d'être transformés en films et à un procédé de production desdits copolymères et terpolymères.

La littérature offre un grand nombre d'exemples de copolymères de l'éthylène et d'une α-oléfine. Ainsi les catalyseurs capables de polymériser l'éthylène sont généralement capables de copolymériser l'éthylène avec une α-oléfine. Toutefois les résultats d'une telle copolymérisation sont très dépendants du catalyseur employé et surtout, en ce qui concerne la qualité des produits, de la nature de l'α-oléfine. Les copolymères les mieux adaptés à la transformation en films sont ceux dans lesquels l'α-oléfine comprend au moins 4 atomes de carbone. Pour de tels copolymères, FR-A-1 604 980 enseigne d'une part l'importance d'une distribution étroite des masses moléculaires et d'autre part l'importance de la distribution du comonomère entre les molécules du copolymère. En considérant ce dernier facteur, il enseigne que des copolymères homogènes présentent de meilleures propriétés, pour la fabrication de films, que des copolymères hétérogènes.

Il est donc connu qu'un copolymère de l'éthylène et d'une α-oléfine destiné à un mode déterminé de transformation en objets finis n'est véritablement défini que par la donnée simultanée des sept caractéristiques suivantes: 1) masse volumique, 2) nature du comonomère, 3) indice de fluidité, 4) teneur molaire en comonomère, 5) masse moléculaire moyenne, 6) indice de polydispersité mesurant la distribution des masses moléculaires et défini ci-après, et 7) indice d'homogénéité de la distribution du comonomère.

Lorsque, en présence de copolymères présentant des valeurs égales ou équivalentes pour six des septs caractéristiques précédentes, on constate des valeurs nettement différentes quant à la septième caractéristique, on doit s'attendre pour ces copolymères à des aptitudes nettement différenciées à un mode déterminé de transformation en objets finis et donc, en définitive, à des propriétés nettement différentes de ces objets finis.

On vient maintenant de découvrir, de façon surprenante, qu'il est possible d'obtenir des copolymères hétérogènes de l'éthylène et d'α-oléfines comprenant au moins 4 atomes de carbone qui, contrairement à l'enseignement de Fr-A-1 604 980, présentent des propriétés adaptées à leur transformation en films.

Dans la suite de la description, le terme copolymère sera employé pour désigner à la fois des polymères binaires comportant une α-oléfine en sus de l'éthylène et des polymères ternaires comportant deux α-oléfines en sus de l'éthyléne. Par extension, la présente invention s'applique aussi à des polymères comportant plus de deux α-oléfines en sus de l'éthylène.

Un premier objet de la présente invention consiste donc en des copolymères hétérogènes à base d'éthylène et d'α-oléfines comprenant au moins 4 atomes de carbone, capables d'être transformés en films possédant un ensemble de propriétés au moins techniquement équivalent, de préférence supérieur, à celui de polymères de l'éthylène similaires ou analogues. Par «ensemble de propriétés supérieur» il faut entendre que, dans l'ensemble des propriétés considérées, toutes les propriétés ne sont pas obligatoirement et simultanément améliorées, mais que certaines de ces propriétés sont améliorées de façon sensible au profit de l'utilisateur de films, les autres propriétés étant soit simplement conservées soit diminuées sans que cette diminution annule les effets favorables des premières propriétés. Par «polymères de l'éthylène similaires ou analogues» il faut entendre non seulement ceux des copolymères de l'éthylène dont l'aptitude à être transformés en films est notée dans la littérature mais aussi et surtout les homopolymères de l'éthylène dits «polyéthylènes basse densité» produits par le procédé sous haute pression en présence d'initiateurs de radicaux libres.

D'autres buts de la présente invention consistent d'une part en des films de propriétés améliorées fabriqués à partir desdits copolymères et d'autre part en un procédé de production desdits copolymères.

En premier lieu, l'invention consiste en des copolymères d'éthylène et d'α-oléfines comprenant au moins 4 atomes de carbone, de masse volumique comprise entre 0,905 et 0,940 g/$cm^3$ et d'indice de fluidité compris entre 0,2 et 2 dg/min, ayant une teneur moyenne en motifs α-oléfines comprise entre 1 et 8% en moles et caractérisés en ce que la distribution des motifs α-oléfines le long de la chaîne est hétérogène, ledit copolymère comprenant des fractions cristallines et des fractions amorphes, et en ce que la teneur en motifs α-oléfines le long de la chaîne varie entre au moins 0,2 et au plus 5 fois leur teneur moyenne selon les fractions considérées. Les copolymères selon l'invention peuvent subsidiairement être caractérisés en ce que leurs fractions cristallines présentent un pic de fusion compris entre 116° et 130 °C et représentent de 20 à 50% en poids du copolymère total.

Les copolymères selon l'invention peuvent être subsidiairement caractérisés par une masse moléculaire moyenne comprise entre 15 000 et 60 000 et/ou un indice de polydispersité compris entre 3 et 9 pour les polymères binaires, 6 à 12 pour les polymères ternaires. Dans la définition précédente il faut entendre, de manière conventionnelle dans la technique des polymères, la masse moléculaire moyenne comme étant la masse moléculaire moyenne en nombre Mn et l'indice de polydispersité comme étant le rapport Mw/Mn de la masse moléculaire moyenne en poids à la masse moléculaire moyenne en nombre. D'autre part les α-oléfines pouvant entrer dans la constitution des copolymères hétérogènes selon l'invention sont par exemple le butène-1, l'héxène-1, le méthyl-4-pentène-1, l'octène-1. Lorsque deux α-oléfines sont simultanément présentes dans le copolymère selon l'invention (cas d'un terpolymère) leur teneur moyenne totale est, comme décrit précédemment, comprise entre 1 et 8% en moles et en outre le rapport de leurs teneurs moyennes respectives est de préférence compris entre 0,25 et 4. Ainsi par exemple un terpolymère éthylène/butène-1/hexène-1 selon l'invention comprenant en moyenne 95% en moles de motifs éthylène pourra comprendre en moyenne de 1 à 4% en moles de motifs butène-1 et en moyenne de 4 à 1% en moles de motifs hexène-1.

Les copolymères selon l'invention ainsi définis sont doués de propriétés remarquables et sont capables d'être transformés en films possédant un ensemble de propriétés techniquement supérieur aux polymères de l'éthylène reconnus comme filmables. Les principales propriétés sur lesquelles porte l'amélioration sont l'allongement à la rupture et la résistance au déchirement. Ainsi les copolymères selon l'invention présentent généralement, pour un film de 50 µm d'épaisseur, un allongement à la rupture compris entre 600% et 1100% environ, une résistance au déchirement (mesurée selon la norme ASTM D 1922–67) comprise entre 150 et 900 grammes environ selon qu'il s'agit du sens longitudinal ou du sens transversal, une étirabilité industrielle inférieure ou égale à 10 µm selon les conditions de mesure précisées dans les exemples ci-après, une brillance (mesurée selon la norme ASTM D-2457) supérieure ou égale à 70% et une résistance à l'impact (mesurée selon la norme NF T 54 109) pouvant atteindre jusqu'à 400 grammes. Il convient de noter que, en ce qui concerne les propriétés dans le sens longitudinal, l'épaisseur de l'échantillon de mesure doit toujours être précisé car ces propriétés augmentent de manière importante lorsque l'épaisseur augmente.

Le procédé de production des copolymères selon l'invention consiste à copolymériser l'éthylène et les α-oléfines ayant au moins 4 atomes de carbone dans au moins un réacteur comportant au moins une zone, à une température comprise entre 180° et 320 °C et sous une pression comprise entre 300 et 2500 bars, au moyen d'un système catalytique de type Ziegler comprenant d'une part un activateur choisi parmi les hydrures et les composés organométalliques des métaux des groupes I à III de la Classification Périodique et d'autre part au moins un composé halogéné de métal de transition, caractérisé en ce que d'une part le flux gazeux alimentant le réacteur est constitué en régime stationnaire de 10 à 80% en poids d'éthylène et de 20 à 90% en poids d'α-oléfines et d'autre part le système catalytique présente une réactivité vis-à-vis de l'éthylène très supérieure, de préférence de 5 à 15 fois supérieure, à sa réactivité vis-à-vis des α-oléfines.

Un tel composé a pour formule:

$$(TiCl_3, \frac{1}{3} AlCl_3)\ (MX_n)_x (MgCl_2)_y$$

dans laquelle n est la valence de M, $0,3 \leqslant x \leqslant 3$, $0 \leqslant y \leqslant 20$, M est un métal de transition choisi dans les groupes VB, VIB et VIII de la Classification Périodique et X est un halogène. Lorsque le métal M est choisi dans les groupes VB et VIB, ces catalyseurs ont une structure de solution solide binaire Ti-M qui peut être caractérisée par la dimention de ses cristallites. On a trouvé que, du point de vue de l'efficacité des catalyseurs, cette dimension déterminée par la méthode d'analyse radiocristallographique (loi de Sherrer) dans la direction perpendiculaire au plan (300) doit être de préférence inférieure ou égale à 100 angstroems (Å) (10 nm). Comme on le comprend par leur formule développée, ces catalyseurs peuvent le cas échéant (lorsque $y > 0$) être fixés sur un support inerte constitué d'un halogénure de magnésium anhydre. Parmi les métaux M, le vanadium, le chrome et le nickel sont préférés, mais on peut employer le molybdène et le tungstène. L'halogène de l'halogénure de magnésium et celui de l'halogénure du métal M peuvent être identiques ou différents et sont choisis parmi le fluor, le chlore, le brome et l'iode.

Un procédé de fabrication de tels composés consiste à mettre en contact le trichlorure de titane syncristallisé avec le chlorure d'aluminium, l'halogénure du métal M et le cas échéant l'halogénure de magnésium anhydre pendant une durée suffisante. Ceci peut être obtenu efficacement en soumettant les trois halogénures précités à une étape de broyage dans laquelle l'énergie de broyage serait au moins égale à 3 KWh par kg de matière solide traitée. Plus précisément, on a observé que l'efficacité de ces composés est d'autant plus grande que cette énergie de broyage est plus élevée. Toutefois, afin d'optimiser cette efficacité compte tenu du coût opératoire et de la nécessité d'économiser l'énergie, il n'est généralement pas nécessaire que l'énergie de broyage soit supérieure à environ 25 KWh par kg de matière solide traitée.

Les proportions de l'activateur et du composé halogéné de métal de transition seront choisies de manière telle que le rapport atomique du métal de l'activateur au métal de transition (ou, dans le cas décrit ci-dessus, à la somme de Ti+M) soit compris entre 1 et 10. Le temps de séjour moyen du système catalytique dans le réacteur de polymérisation est généralement compris entre 2 et 100 secondes. Ce temps de séjour dépend de la température dans le réacteur en ce sens qu'il est d'autant plus élevé que la température est plus basse. Les activateurs préférés sont d'une part les trialkylaluminiums et d'autre part les alkylsiloxalanes tels que ceux décrits dans US-A-3 969 332.

La composition du flux gazeux alimentant le réacteur en régime stationnaire, telle qu'elle caractérise le procédé selon l'invention, doit s'entendre comme une composition moyenne sur l'ensemble du réacteur, étant bien compris que cette composition n'est pas obligatoirement uniforme et peut varier le long du réacteur, particulièrement lorsque celui-ci comporte plusieurs zones. Cette composition varie selon la nature de l'α-oléfine considérée. Ainsi pour un copolymère binaire la teneur en poids en α-oléfine dans ce flux gazeux est comprise de préférence entre 20 et 70% pour le butène-1, entre 35 et 90% pour l'hexène-1. Lorsque le réacteur utilisé dans le procédé

selon l'invention comporte plusieurs zones, on préfère le plus souvent injecter l'essentiel des α-oléfines dans les premières zones fonctionnant à des températures comprises entre 180° et 240 °C, tandis que la dernière zone fonctionne à une température comprise entre 240° et 320 °C sans injection complémentaire substantielle d'α-oléfines.

Le procédé selon l'invention est mis en œuvre de manière continue en utilisant des réacteurs autoclaves ou bien tubulaires, comme cela est habituel dans la technique de polymérisation de l'éthylène sous haute pression. Afin de contrôler avec précision l'indice de fluidité du copolymère, il peut aussi être avantageux d'effectuer la copolymérisation en présence de jusqu'à 2% en moles d'hydrogène.

Comme indiqué précédemment, les copolymères hétérogènes selon l'invention trouvent une application privilégiée dans la fabrication de films de performances améliorées et d'épaisseur comprise entre 5 et 200 µm, en particulier inférieure ou égale à 20 µm, c'est-à-dire inférieure à celle des films de polyéthylène basse densité obtenus par voie radicalaire. Ces films sont obtenus par extrusion a travers une filière plate ou par extrusion-soufflage avec un taux de gonflage compris entre 1,5 et 4 et présentent l'avantage exceptionnel de procurer le même usage et la même solidité que les films de polyéthylène radicalaire pour un poids beaucoup plus faible. Les films ainsi constitués ont de nombreux usages tels que, notamment, les sacs de grande contenance, les films rigides pour l'emballage automatique, les films agricoles.

Les exemples suivants sont donnés à titre illustratif et non limitatif.

Exemple 1

On copolymérise l'éthylène et l'hexène-1 dans un réacteur autoclave de forme cylindrique fonctionnant sous une pression de 1000 bars et muni intérieurement d'un agitateur et d'écrans métalliques qui délimitent trois zones de volume identique. La zone 1, maintenue à une température de 220 °C et alimentée par un flux de 49 kg/h l'hexène-1 et de 24 kg/h d'éthylène, reçoit un système catalytique comprenant d'une part du diméthyléthyldiéthylsiloxalane et d'autre part un composé de formule $TiCl_3, \frac{1}{3} AlCl_3, 2 VCl_3$, en quantités respectivement telles que le rapport atomique Al/Ti soit égal à 3. La zone 2, maintenue à une température $T_2$ (exprimée en °C), est alimentée par un flux de 24 kg/h d'éthylène et reçoit le même système catalytique que précédemment. Enfin la zone 3, à la sortie de laquelle le mélange réactionnel contenant le copolymère est évacué vers un dispositif de séparation et de recyclage, est maintenue à la température $T_3$ (exprimée en °C) et ne reçoit ni monomère ni catalyseur. La teneur pondérale moyenne en hexène-1 dans le réacteur est donc de 50,5%. La copolymérisation est effectuée en présence de 0,12% en moles d'hydrogène. Le temps de séjour moyen du système catalytique dans le réacteur est de 80 secondes.

Le copolymère obtenu est caractérisé par les propriétés suivantes:

a) indice de fluidité (IF) mesuré selon la norme ASTM D 1238–73 et exprimé en dg/min

b) masse volumique ρ exprimée en g/cm$^3$.

c) masse moléculaire moyenne en nombre Mn mesurée par chromatographie de perméation de gel et exprimée en milliers.

d) indice de polydispersité déterminé à partir de Mn et de la masse moléculaire moyenne en poids Mw mesurée selon la même méthode.

e) teneur moyenne en motifs hexène-1 dans le copolymère, exprimée en pour cent molaire et déterminée à partir du taux de groupes méthyles pour 1000 atomes de carbone dans la molécule, par analyse de l'absorption du rayonnement infrarouge selon la norme ASTM D 2238–64 T décrite dans FR-A-1 604 980.

f) indice d'homogénéité de la distribution du comonomère, déterminé par un test de fractionnement du polymère et exprimé par multiple et sous-multiple de la teneur moyenne entre lesquels varie la teneur en motifs hexène-1.

g) point de fusion de la fraction cristalline du copolymère, exprimé en °C et déterminé par analyse enthalpique différentielle.

Les valeurs de ces propriétés sont rassemblées, avec les valeurs de $T_2$ et $T_3$, dans le tableau I ci-après.

Exemple 2

On copolymérise l'éthylène et l'hexène-1, la pression étant maintenue à 1000 bars, dans le même réacteur que précédemment, et dans des conditions identiques, aux exceptions suivantes près. La zone 1 est alimentée par un flux de 61 kg/h d'hexène-1 et de 25 kg/h d'éthylène. La zone 2 reçoit un flux de 25 kg/h d'éthylène. La teneur pondérale moyenne en hexène-1 dans le réacteur est donc de 55%. La copolymérisation est effectuée en l'absence d'hydrogène. Le rendement catalytique $R_c$, exprimé en kilogramme de copolymère par milliatome de métal de transition, ainsi que les propriétés du copolymère obtenu figurent au tableau I ci-après.

Exemple 3

On copolymérise l'éthylène et l'hexène-1, la pression étant maintenue à 600 bars, dans le même réacteur que précédemment et dans des conditions identiques aux exceptions suivantes près. Les zones 1 et 2 sont alimentées chacune par un flux de 27,5 kg/h d'éthylène et de 28,5 kg/h d'hexène-1. La teneur pondérale moyenne en hexène-1 dans le réacteur est donc de 50,9%. La copolymérisation est effectuée en présence de 0,06% en moles d'hydrogène. Le rendement catalytique et les propriétés du copolymère obtenu figurent au tableau I ci-après.

Tableau I

| Exemple | $T_2$ | $T_3$ | $R_c$ | IF | ρ |
|---|---|---|---|---|---|
| 1 | 225 | 270 | 5,1 | 0,6 | 0,929 |
| 2 | 210 | 255 | 7,6 | 0,9 | 0,920 |
| 3 | 220 | 245 | 6,1 | 1,2 | 0,934 |

Tableau I (Suite)

| Exemple | Mn | Mw/ Mn | Hexène-1 | IH | F °C |
|---|---|---|---|---|---|
| 1 | 21,3 | 7,5 | 1,7 | 0,36–3,4 | 126 |
| 2 | 46,4 | 3,4 | 4,5 | 0,22–1,6 | 125 |
| 3 | 18,6 | 8,2 | 2,0 | 0,20–2,5 | 127 |

Exemple 4

On copolymérise l'éthylène et l'octène-1, la pression étant maintenue à 1000 bars, dans le même réacteur et dans les mêmes conditions qu'à l'exemple 3, aux exceptions suivantes près. Les zones 1 et 2 sont alimentées chacune par un flux de 24 kg/h d'éthylène et de 29 kg/h d'octène-1. La teneur pondérale moyenne en octène-1 dans le réacteur est donc de 55%. La copolymérisation est effectuée en l'absence d'hydrogène, les températures des zones 2 et 3 étant respectivement $T_2$=200 °C et $T_3$=250 °C. Le temps de séjour moyen du système catalytique dans le réacteur est de 80 secondes. Le copolymère, obtenu avec un rendement catalytique $R_c$=7 kilogrammes par milliatome de métal de transition, a les propriétés suivantes:

| | | | |
|---|---|---|---|
| I.F. | =0,25 | ρ | =0,933 g/cm$^3$ |
| Mn | =57 000 | Mw/Mn | =3,3 |
| Octène-1 | =1,1% (moles) | F | =127 °C |

Exemple 5

On copolymérise l'éthylène et le butène-1 dans un réacteur autoclave de forme cylindrique fonctionnant sous une pression de 900 bars et muni intérieurement d'un agitateur et d'écrans métalliques qui délimitent trois zones. La zone 1, maintenue à une température de 210 °C, a un volume double de celui de chacune des deux zones suivantes, est alimentée par un flux de 200 kg/h d'un mélange comprenant 36% en poids de butène-1 et 64% en poids d'éthylène et reçoit un système catalytique comprenant d'une part du diméthyléthyldiéthylsiloxalane et d'autre part un composé de formule $TiCl_3, \frac{1}{3} AlCl_3, VCl_3$, en quantité respectivement telle que le rapport atomique Al/Ti soit égal à 3. La zone 2, maintenue à la température de 240 °C, est alimentée par un flux de 55 kg/h du même mélange que précédemment et reçoit le même système catalytique. Enfin la zone 3, à la sortie de laquelle le mélange réactionnel contenant le copolymère est évacué vers un dispositif de séparation et de recyclage, est maintenue à la température de 280 °C et ne reçoit ni monomère ni catalyseur. Le temps de séjour moyen du système catalytique dans le réacteur est de 43 secondes.

Le rendement catalytique ainsi que les propriétés du copolymère obtenu figurent au tableau II ci-après.

Exemple 6

On terpolymérise, en l'absence d'hydrogène, l'éthylène, le butène-1 et l'hexène-1 dans le réacteur décrit à l'exemple 1, fonctionnant sous une pression de 1000 bars. La zone 1, maintenue à une température de 180 °C et alimentée par un flux de 13 kg/h d'hexène-1, 14 kg/h d'éthylène et 6 kg/h de butène-1, reçoit un système catalytique comprenant d'une part du diméthyléthyldiéthylsiloxalane et d'autre part un composé de formule $TiCl_3, \frac{1}{3} AlCl_3, 6\ MgCl_2, 0{,}5\ NiCl_2$ en quantités respectivement telles que le rapport atomique Al/Ti soit égal à 3. La zone 2, maintenue à une température de 225 °C, est alimentée par un flux de 14 kg/h d'éthylène et 6 kg/h de butène -1 et reçoit le même système catalytique. Enfin la zone 3, à la sortie de laquelle le mélange réactionnel contenant le terpolymère est évacué vers un dispositif de séparation et de recyclage, est maintenue à la température de 245 °C et ne reçoit ni monomère ni catalyseur. Les teneurs pondérales moyennes dans le réacteur sont donc de 53% pour l'éthylène, 24% pour l'hexène-1 et 23% pour le butène-1. Le temps de séjour moyen du système catalytique dans le réacteur est égal à 85s. Le rendement catalytique ainsi que les propriétés du terpolymère obtenu figurent au tableau II ci-après.

Exemple 7

On terpolymérise, en présence de 0,15% d'hydrogène, l'éthylène, le butène-1 et l'hexène-1 dans le réacteur décrit à l'exemple 1, fonctionnant sous une pression de 800 bars. La zone 1, maintenue à une température de 180 °C et alimentée par un flux de 27,1 kg/h d'hexène-1, 18,4 kg/h d'éthylène et 1,6 kg/h de butène-1, reçoit le système catalytique décrit à l'exemple 5. Les zones 2 et 3, maintenues respectivement à des températures de 220 °C et 260 °C, sont alimentées chacune par des flux de 18,4 kg/h d'éthylène et de 1,6 kg/h de butène-1. Le temps de séjour moyen du système catalytique dans le réacteur est égal à 100 secondes. Le rendement catalytique ainsi que les propriétés du terpolymère obtenu figurent au tableau II ci-après.

Exemple 8

On copolymérise, en présence de 0,1% d'hydrogène, l'éthylène et le butène-1 dans le réacteur décrit à l'exemple 1, lequel est alimenté par un flux gazeux constitué en régime stationnaire de 35% en poids d'éthylène et de 65% en poids de butène-1. Les zones 1, 2 et 3 fonctionnent à des températures respectives de 200 °C, 210 °C et 235 °C et le système catalytique utilisé est

celui décrit à l'exemple 1. Le temps de séjour moyen du système catalytique dans le réacteur est égal à 45 secondes. Le rendement catalytique ainsi que les propriétés du copolymère obtenu figurent au tableau II ci-après.

Tableau II

| Exemple | $R_c$ | IF | ρ | Mn | Mw/Mn |
|---|---|---|---|---|---|
| 5 | 6,2 | 0,8 | 0,919 | 43 | 3,6 |
| 6 | 4,5 | 0,5 | 0,915 | 15 | 10,5 |
| 7 | 4,9 | 0,6 | 0,933 | 21,5 | 7,6 |
| 8 | 6,8 | 0,8 | 0,908 | 25 | 5,4 |

Tableau II (Suite)

| Exemple | Butène-1 | Hexène-1 | IH | F |
|---|---|---|---|---|
| 5 | 3,2 | – | 0,5–2,2 | 122 |
| 6 | 2,6 | 0,9 | 0,3–3,0 | 121 |
| 7 | 0,4 | 1,3 | 0,2–1,8 | 128 |
| 8 | 6,0 | – | 0,5–2,0 | 117 |

Exemples 9 à 14

On transforme par extrusion-soufflage les copolymères des exemples 1 à 3, 4, 5 et 7 en films d'épaisseur 50 µm, dans les conditions suivantes:

– température de la résine: 230 °C
– vitesse de rotation de la vis d'extrusion: 80 tours/min
– taux de gonflage: 2,0

Les propriétés que l'on mesure sur ces films sont:

a) l'allongement à la rupture AR (exprimé en %) dans les sens longitudinal L et transversal T, déterminé selon la norme ASTM D 882–67.

b) la résistance au déchirement RD (exprimée en grammes) dans les sens longitudinal L et transversal T, déterminée selon la norme ASTM D 1922–67.

Les résultats de ces mesures figurent dans le tableau III, où il faut comprendre que les exemples 9 à 11 correspondent respectivement aux copolymères des exemples 1 à 3, et les exemples 12 à 14 correspondent respectivement aux copolymères des exemples 4, 5 et 7.

Tableau III

| Exemple | | 9 | 10 | 11 | 12 | 13 | 14 |
|---|---|---|---|---|---|---|---|
| AR | L | 750 | 635 | 635 | 630 | 910 | 760 |
| | T | 860 | 805 | 610 | 660 | 1060 | 850 |
| RD | L | 190 | 680 | 160 | 150 | 300 | 200 |
| | T | 775 | 900 | 430 | 500 | 640 | 440 |

Le film de l'exemple 10 montre en outre une résistance à l'impact (mesurée selon la norme NF T 54 109) égale à 300 grammes.

Par ailleurs tous les copolymères, étudiés ci-dessus présentent une étirabilité industrielle, définie comme l'épaisseur de film permettant une fabrication continue par extrusion-soufflage pendant une durée de 2 heures sans perturbations, égale à 5 µm.

Exemple 15

On transforme par extrusion-soufflage, dans les conditions décrites précédemment, le copolymère de l'exemple 8 en un film d'épaisseur 50 µm. On mesure sur ce film les propriétés suivantes:

– résistance à l'impact: 400 g
– résistance au déchirement longitudinal: 600 g
– résistance au déchirement transversal: 800 g

Exemple 16

Les films obtenus aux exemples 10, 13 et 14 sont soumis à la mesure des propriétés optiques: brillance (selon la norme ASTM D-2457) et trouble (selon la norme ASTM D-1003). Ces propriétés, exprimées en pourcentage, ont les valeurs indiquées dans le tableau IV.

Tableau IV

| Film | Ex. 10 | Ex. 13 | Ex. 14 |
|---|---|---|---|
| Brillance | 95 | 80 | 85 |
| Trouble | 10,5 | 7 | 13 |

**Revendications**

1. Copolymères d'éthylène et d'α-oléfines comprenant au moins 4 atomes de carbone, de masse volumique comprise entre 0,905 et 0,940 g/$cm^3$ et d'indice de fluidité compris entre 0,2 et 2 dg/min, ayant une teneur moyenne en motifs α-oléfines comprise entre 1 et 8% en moles et caractérisés en ce que la distribution des motifs α-oléfines le long de la chaîne est hétérogène, ledit copolymère comprenant des fractions cristallines et des fractions amorphes, et en ce que la teneur en motifs α-oléfines le long de la chaîne varie entre au moins 0,2 et au plus 5 fois la teneur moyenne selon les fractions considérées.

2. Copolymères selon la revendication 1, caractérisés en ce que leurs fractions cristallines présentent un pic unique de fusion compris entre 116° et 130 °C et représentent de 20 à 50% en poids du copolymère total.

3. Copolymères selon l'une des revendications 1 et 2, caractérisés en ce que leur masse moléculaire moyenne est comprise entre 15 000 et 60 000.

4. Copolymères selon l'une des revendications 1 à 3, caractérisés en ce qu'ils comportent une seule α-oléfine et en ce que leur indice de polydispersité est compris entre 3 et 9.

5. Copolymères selon l'une des revendications 1 à 3, caractérisés en ce qu'ils comportent deux α-oléfines dont le rapport des teneurs moyennes respectives est compris entre 0,25 et 4.

6. Copolymères selon la revendication 5, caractérisés en ce que leur indice de polydispersité est compris entre 6 et 12.

7. Copolymères selon l'une des revendications 1 à 6, caractérisés en ce que les α-oléfines sont choisies parmi le butène-1, l'hexène-1, le méthyl-4 pentène-1 et l'octène-1.

8. Application des copolymères selon l'une des revendications 1 à 7, à la fabrication de films d'épaisseur comprise entre 5 et 200 μm.

9. Procédé de fabrication de copolymères selon l'une des revendications 1 à 7, consistant à copolymériser l'éthylène et les α-oléfines ayant au moins 4 atomes de carbone dans au moins un réacteur comportant au moins une zone, à une température comprise entre 180° et 320 °C et sous une pression comprise entre 300 et 2500 bars, au moyen d'un système catalytique de type Ziegler comprenant d'une part un activateur choisi parmi les hydrures et les composés organométalliques des métaux des groupes I à III de la Classification Périodique et d'autre part au moins un composé halogéné de métal de transition, le rapport atomique du métal de l'activateur au métal de transition étant compris entre 1 et 10 et le temps de séjour moyen du système catalytique dans le réacteur de polymérisation étant compris entre 2 et 100 secondes, caractérisé en ce que d'une part le flux gazeux alimentant le réacteur est constitué en régime stationnaire de 10 à 80% en poids d'éthylène et de 20 à 90% en poids d'α-oléfine et d'autre part le rapport de la réactivité du système catalytique vis-à-vis de l'éthylène à sa réactivité vis-à-vis des α-oléfines est compris entre 5 et 15.

10. Procédé selon la revendication 9, caractérisé en ce que le composé halogéné de métal de transition a pour formule:

$$(TiCl_3,\frac{1}{3}AlCl_3)\ (MX_n)_x\ (MgCl_2)_y$$

dans laquelle n est la valence de M, $0,3 \leqslant x \leqslant 3$, $0 \leqslant y \leqslant 20$, M est un métal de transition choisi dans les groupes VB, VIB et VIII de la Classification Périodique et X est un halogène.

11. Procédé selon l'une des revendications 9 et 10, caractérisé en ce que le réacteur comporte plusieurs zones et en ce que l'essentiel des α-oléfines est injecté dans les premières zones fonctionnant à des températures comprises entre 180° et 240 °C, tandis que la dernière zone fonctionne à une température comprise entre 240° et 320 °C sans injection complémentaire substantielle d'α-oléfines.

12. Procédé selon l'une des revendications 9 à 11, caractérisé en ce que l'activateur est choisi parmi les trialkylaluminiums et les alkylsiloxalanes.

13. Procédé selon l'une des revendications 9 à 12, caractérisé en ce que la copolymérisation est effectuée en présence de jusqu'à 2% en moles d'hydrogène.

14. Procédés selon l'une des revendications 9 à 13, caractérisé en ce que l'α-oléfine est le butène-1 et en ce que le flux gazeux alimentant le réacteur est constitué en régime stationnaire de 20 à 70% en poids de butène-1 et de 30 à 80% en poids d'éthylène.

15. Procédé selon l'une des revendications 9 à 13, caractérisé en ce que l'α-oléfine est l'hexène-1 et en ce que le flux gazeux alimentant le réacteur est constitué en régime stationnaire de 35 à 90% en poids d'hexène-1 et de 10 à 65% en poids d'éthylène.

**Patentansprüche**

1. Copolymere von Äthylen und α-Olefinen mit mindestens vier Kohlenstoffatomen, welche Copolymere eine Dichte zwischen 0,905 und 0,940 g/cm³, einen Fliessindex zwischen 0,2 und 2 dg/min und einen durchschnittlichen Gehalt an α-Olefin-Einheiten zwischen 1 und 8 Mol.-% besitzen und dadurch gekennzeichnet sind, dass die Verteilung der α-Olefin-Einheiten längs der Kette heterogen ist, wobei das genannte Copolymer kristalline Anteile und amorphe Anteile enthält, und dass der Gehalt an α-Olefin-Einheiten längs der Kette je nach den betrachteten Anteilen zwischen mindestens dem 0,2-fachen und höchstens dem 5-fachen durchschnittlichen Gehalt variiert.

2. Copolymere nach Anspruch 1, dadurch gekennzeichnet, dass ihre kristallinen Anteile einen einzigen Schmelzpunkt zwischen 116° und 130 °C aufweisen und 20 bis 50 Gew.-% des gesamten Copolymers ausmachen.

3. Copolymere nach Anspruch 1 oder 2, dadurch gekennzeichnet, dass ihre mittlere Molekularmasse zwischen 15 000 und 60 000 liegt.

4. Copolymere nach einem der Ansprüche 1 bis 3, dadurch gekennzeichnet, dass sie ein einziges α-Olefin enthalten und ihre Polydispersitätszahl zwischen 3 und 9 beträgt.

5. Copolymere nach einem der Ansprüche 1 bis 3, dadurch gekennzeichnet, dass sie zwei α-Olefine enthalten, wobei das Verhältnis ihrer durchschnittlichen Anteile zwischen 0,25 und 4 beträgt.

6. Copolymere nach Anspruch 5, dadurch gekennzeichnet, dass ihre Polydispersitätszahl zwischen 6 und 12 beträgt.

7. Copolymere nach einem der Ansprüche 1 bis 6, dadurch gekennzeichnet, dass die α-Olefine ausgewählt sind aus der Gruppe bestehend aus Buten-1, Hexen-1, Methyl-4 penten-1 und Octen-1.

8. Verwendung der Copolymere nach einem der Ansprüche 1 bis 7 bei der Herstellung von Filmen einer Dicke zwischen 5 und 200 μm.

9. Verfahren zur Herstellung von Copolymeren nach einem der Ansprüche 1 bis 7, das darin besteht, dass das Äthylen und die α-Olefine mit 4 Kohlenstoffatomen in mindestens einem mindestens eine Zone aufweisenden Reaktor bei einer Temperatur zwischen 180° und 320 °C und unter einem Druck zwischen 300 und 2500 bar mit Hilfe eines Ziegler-Katalysatorsystems copolymerisiert werden, das einerseits einen Aktivator ausgewählt aus den Hydriden und den organometallischen Verbindungen der Metalle der Gruppen I bis III des Periodensystems und anderseits mindestens eine Übergangsmetall-Halogenverbindung enthält, wobei das Atomverhältnis des Metalls des Aktivators zum Übergangsmetall zwischen 1 und 10 liegt und die Verweilzeit des Katalysatorsystems in dem Polymerisationsreaktor zwischen 2 und 100 s beträgt, dadurch gekennzeichnet, dass einerseits der den Reaktor speisende Gasstrom konstant aus 10 bis 80 Gew.-% Äthylen und 20 bis 90 Gew.-% α-Olefin besteht und anderseits das Verhältnis der Reaktivität des Katalysatorsystems gegenüber dem Äthylen zu seiner Reaktivität gegenüber den α-Olefinen zwischen 5 und 15 beträgt.

10. Verfahren nach Anspruch 9, dadurch gekennzeichnet, dass die Übergangsmetall-Halogenverbindung die Formel:

$$(TiCl_3, \frac{1}{3} AlCl_3)\ (MX_n)_x\ (MgCl_2)_y$$

besitzt, in der n die Wertigkeit von M bedeutet, $0{,}3 \leqslant x \leqslant 3$, $0 \leqslant y \leqslant 20$, M ein aus den Gruppen VB, VIB und VIII des Periodensystems ausgewähltes Übergangsmetall und X ein Halogen ist.

11. Verfahren nach Anspruch 9 oder 10, dadurch gekennzeichnet, dass der Reaktor mehrere Zonen besitzt und dass der Hauptteil der α-Olefine in die ersten Zonen eingespritzt wird, die bei Temperaturen zwischen 180° und 240 °C arbeiten, während die letzte Zone bei einer Temperatur zwischen 240° und 320 °C ohne wesentliche zusätzliche Einspritzung von α-Olefinen arbeitet.

12. Verfahren nach einem der Ansprüche 9 bis 11, dadurch gekennzeichnet, dass der Aktivator aus den Trialkylaluminiumverbindungen und den Alkylsiloxalanen ausgewählt wird.

13. Verfahren nach einem der Ansprüche 9 bis 12, dadurch gekennzeichnet, dass die Copolymerisation in Gegenwart von bis zu 2 Mol.-% Wasserstoff durchgeführt wird.

14. Verfahren nach einem der Ansprüche 9 bis 13, dadurch gekennzeichnet, dass das α-Olefin Buten-1 ist und der den Reaktor speisende Gasstrom konstant aus 20 bis 70 Gew.-% Buten-1 und 30 bis 80 Gew.-% Äthylen gebildet wird.

15. Verfahren nach einem der Ansprüche 9 bis 13, dadurch gekennzeichnet, dass das α-Olefin Hexen-1 ist und dass der den Reaktor speisende Gasstrom konstant aus 35 bis 90 Gew.-% Hexen-1 und 10 bis 65 Gew.-% Äthylen gebildet wird.

## Claims

1. Copolymers of ethylene and of α-olefins comprising at least 4 carbon atoms, having a density lying between 0.905 and 0.940 g/cm$^3$ and a melt index lying between 0.2 and 2 dg/min., having an average content of α-olefin units lying between 1 and 8 mole percent and characterized in that the distribution of the α-olefin units along the backbone is heterogeneous, the said copolymer comprising crystalline fractions and amorphous fractions, and the content of α-olefin units along the backbone varies between at least 0.2 and at most 5 times the average content according to the fractions in question.

2. Copolymers according to claim 1, characterized in that their crystalline fractions exhibit a single melting peak lying between 116° and 130 °C and represent from 20 to 50% by weight of the total copolymer.

3. Copolymers according to either of claims 1 and 2, characterized in that their average molecular weight lies between 15 000 and 60 000.

4. Copolymers according to one of claims 1 to 3, characterized in that they comprise a single α-olefin and their polydispersity index lies between 3 and 9.

5. Copolymers according to any of claims 1 to 3, characterized in that they comprise two α-olefins and the ratio between their respective average contents lies between 0.25 and 4.

6. Copolymers according to claim 5, characterized in that their polydispersity index is between 6 and 12.

7. Copolymers according to one of claims 1 to 6, characterized in that the α-olefins are selected from butene-1, hexene-1, methyl-4-pentene-1 and octene-1.

8. Application of copolymers according to one of claims 1 to 7 to the manufacture of films having a thickness between 5 to 200 µm.

9. A process for producing copolymers according to one of claims 1 to 7 consisting of copolymerizing ethylene and α-olefins having at least 4 carbon atoms in at least one reactor including at least one zone, at a temperature between 180° and 320 °C and under a pressure between 300 and 2500 bars, by means of a catalytic system of Ziegler type comprising on the one hand an activator selected from hydrides and organometallic compounds of metals of groups I to III of the Periodic Table and on the other hand at least one halogenated transition metal compound, the atomic ratio of the metal of the activator to the transition metal lying between 1 and 10 and the average dwell time of the catalytic system in the polymerization reactor lying between 2 and 100 seconds, characterized in that on the one hand the gas-flow feeding the reactor consists in steady operation of 10 to 80% by weight of ethylene and of 20 to 90% by weight of α-olefin and on the other hand the ratio of the reactivity of the catalytic system with respect to the ethylene to its reactivity with respect to the α-olefin lies between 5 and 15.

10. A process according to claim 9, characterized in that the halogenated transition metal compound has the formula:

$$(TiCl_3, \frac{1}{3} AlCl_3)\ (MX_3)_x\ (MgCl_2)_y$$

wherein $0.3 \leqslant x \leqslant 3.0 \leqslant y \leqslant 20$, M is a transition metal selected from groups VB, VIB and VIII of the Periodic Table and X is a halogen.

11. A process according to any of claims 9 and 10, characterized in that the reactor comprises several zones and substantially all the α-olefins are injected into the first zones operating at temperatures between 180° and 240 °C, whereas the last zone operates at a temperature between 240°

and 320 °C without substantial additional injection of α-olefins.

12. A process according to any of claims 9 to 11, characterized in that the activator is selected from trialkylaluminiums and alkylsiloxalanes.

13. A process according to any of claims 9 to 12, characterized in that copolymerization is effected in the presence of up to 2 mole percent of hydrogen.

14. A process according to any of claims 9 to 13, characterized in that the α-olefin is butene-1 and the gas-flow feeding the reactor comprises, in steady operation, from 20 to 70% by weight butene-1 and from 30 to 80% by weight ethylene.

15. A process according to any of claims 9 to 13, characterized in that the α-olefin is hexene-1 end the gas-flow feeding the reactor comprises, in steady operation, from 35 to 90% by weight hexene-1 and from 10 to 65% by weight ethylene.